# EUROPEAN PATENT APPLICATION

(11) **EP 2 104 270 A1**
(43) Date of publication of application: **23.09.2009**
(21) Application number: 07846016.9
(22) Date of filing: 26.12.2007
(51) Int. Cl.: H04L 12/14

(54) **METHOD, DEVICE AND SYSTEM FOR POLICY CONTROL**

(30) Priority: 31.12.2006 CN 200610167372
(71) Applicant: Huawei Technologies Co., Ltd., Shenzhen, Guangdong Province 518129 (CN)
(72) Inventor: ZHENG, Zhenjian, Shenzhen Guangdong 518129 (CN)
(74) Representative: Charles, Glyndwr
(86) International application number: PCT/CN2007/003822
(87) International publication number: WO 2008/086702

(57) **Abstract**

A method for controlling policies, a communication apparatus for implementing policy control, and a multimedia communication system are disclosed to overcome the incapability of performing effective session control for the target UE caused by failure of the PCEF obtaining the matching control policy in time. The method is as follows: The PCRF obtains or generates control policies of multiple target UEs according to the policy request information, and delivers the control policies to the PCEF, where multiple target UEs correspond to the same public user identifier; the PCEF selects a proper control policy among the control policies according to the response sent by one of the target UEs, and executes the selected control policy. Therefore, the PCEF can obtain the updated control policy in time, and perform matching session control on the corresponding target UE.

## Description

### FIELD OF THE INVENTION

The present invention relates to communication technologies, and in particular, to a method, apparatus and system for controlling policies.

### BACKGROUND

With expansion of the Internet, various network services are emerging, and advanced multimedia communication systems come forth one after another. The multimedia communication systems provides the user with various application services and broadband multimedia services, including:
various video and audio streams, Video On Demand (VOD), video multicast, multimedia interaction, and bandwidth-demanding network games, which are targeted at ordinary residential users; and
videoconference, tele-education, Virtual Private Network (VPN), and Quality of Service (QoS)-ensured data dedicated line, which are targeted at commercial users.

With diversification of the system service contents, the user imposes higher and higher requirements on the multimedia communication system. Therefore, in the Policy and Charging Control (PCC) architecture of the 3^{rd} Generation Partnership Project Release 7 (3GPP R7), a Policy and Charging Rule Function (PCRF) entity is introduced between the application layer and the transport layer. The PCRF is designed to obtain or generate control policies, including charging policies and Quality of Service (QoS) policies. The PCC network architecture defined by the 3GPP includes these entities: Application Function (AF), PCRF, Policy and Charging Enforcement Function (PCEF), and Subscription Profile Repository (SPR).

In a multimedia communication system, several User Equipments (UEs), each of which has a private user identifier, can share a public user identifier. Therefore, when a user initiates a call to this public user identifier (namely, forked call), each of the UEs corresponding to the public user identifier returns a response to the AF consecutively. After receiving the first response, the AF sends an authorized initialization request to the PCRF. After receiving another response, the AF sends an authorized modification request to the PCRF. The PCRF obtains or generates the corresponding control policy according to the received policy request information (including authorized initialization request and authorized modification request).

In the scenario of forked call in the multimedia communication system in the prior art, the PCRF only delivers the obtained or generated control policies to the PCEF according to the authorized initialization request, and delivers the control policy obtained or generated according to the authorized modification request to the PCEF only if requested proactively by the PCEF. In some scenarios, several UEs corresponding to one public user identifier have different QoS capabilities. Some UEs are unable to trigger the PCEF to request the PCRF proactively for the corresponding control policy. In this case, the PCEF is unable to obtain the control policy for a UE in time, thus being unable to perform session controlling for the matched UE. For example, if a mobile number and a residential telephone number of a user are bound to a same public number, when the public number is dialed, the mobile phone (UE1) and the residential telephone (UE2) of the user each return a response to the AF consecutively. If the UE2 returns the response first, the AF sends an authorized initialization request to the PCRF, and the PCRF obtains or generates a control policy specific to UE2 according to the request, and sends the control policy to the PCEF. When UE1 returns the response to the AF, the AF sends an authorized modification request to the PCRF, and the PCRF obtains or generates a control policy specific to UE1 according to the request, without sending any control policy to the PCEF. If the user lets the UE1 go off-hook at this time, namely, if the user answers the call through the mobile phone, the PCEF executes the UE2-specific control policy for UE1, and this control policy includes a charging policy and a QoS policy of the UE2. Neither of the policies matches the UE1. Therefore, the call quality, charge calculation and other related services are affected to some extent during the call process, thus affecting the user experience.

### SUMMARY

A method and an apparatus for controlling policies, and a corresponding multimedia communication system are provided in an embodiment of the present invention to overcome the defect in the prior art. That is, in the prior art in respect of the scenario of forked call in the multimedia communication system, i.e., the PCEF is unable to obtain the matching control policy in time, thus being unable to exercise effective session control on the target UE and affecting the user experience.

A method for controlling policies in an embodiment of the present invention includes:
obtaining or generating, by a PCRF, a control policy corresponding to each target UE according to the policy request information of multiple target UEs, and delivering the control policy of multiple target UEs to the PCEF, where the multiple target UEs correspond to the same public user identifier; and
selecting, by the PCEF, a proper control policy among the control policies of multiple target UEs according to a response sent by one of the multiple target UEs, and executing the control policy.

A method for updating a control policy in an embodiment of the present invention includes:
obtaining or generating, by the PCRF, a proper control policy according to the received authorized modification request, and delivering the control policy to the PCEF proactively; or
delivering a policy update notification to the PCEF, and delivering the control policy to the PCEF after receiving the policy update request from the PCEF.

A communication apparatus provided in an embodiment of the present invention includes:
a receiving unit, adapted to receive policy request information;
a processing unit, adapted to obtain or generate control policies corresponding to each target UE according to the policy request information of multiple target UEs corresponding to the same public user identifier; and
a sending unit, adapted to deliver the control policies obtained or generated.

A communication apparatus provided in an embodiment of the present invention includes:
a communicating unit, adapted to receive the control policies of multiple target UEs and the replies sent by the target UEs; and
an executing unit, adapted to select a proper control policy among the received control policies of multiple target UEs according to the replies sent by the target UEs, and execute the control policy.

A multimedia communication system provided in an embodiment of the present invention includes:
an AF, adapted to send policy request information to the PCRF upon receiving a response from the target UE, and notify the PCRF upon receiving a replay from the target UE;
a PCRF, adapted to obtain or generate control policies corresponding to each target UE according to the policy request information of multiple target UEs corresponding to the same public user identifier, and deliver the control policies of the multiple target UEs to the PCEF; and
a PCEF, adapted to select a proper control policy among the control policies of multiple target UEs delivered by the PCRF according to the replies sent by the target UEs, and execute the control policy.

In the embodiments of the present invention, after obtaining or generating multiple control policies specific to multiple target UEs corresponding to the same public user identifier, the PCRF delivers the control policies. Therefore, in the scenarios of forked session in the multimedia communication system, the PCEF can obtain the updated control policy in time, and perform matching session control for the corresponding target UE, thus ensuring QoS of the multicast communication system and improving the user experience.

### BRIEF DESCRIPTION OF THE DRAWINGS

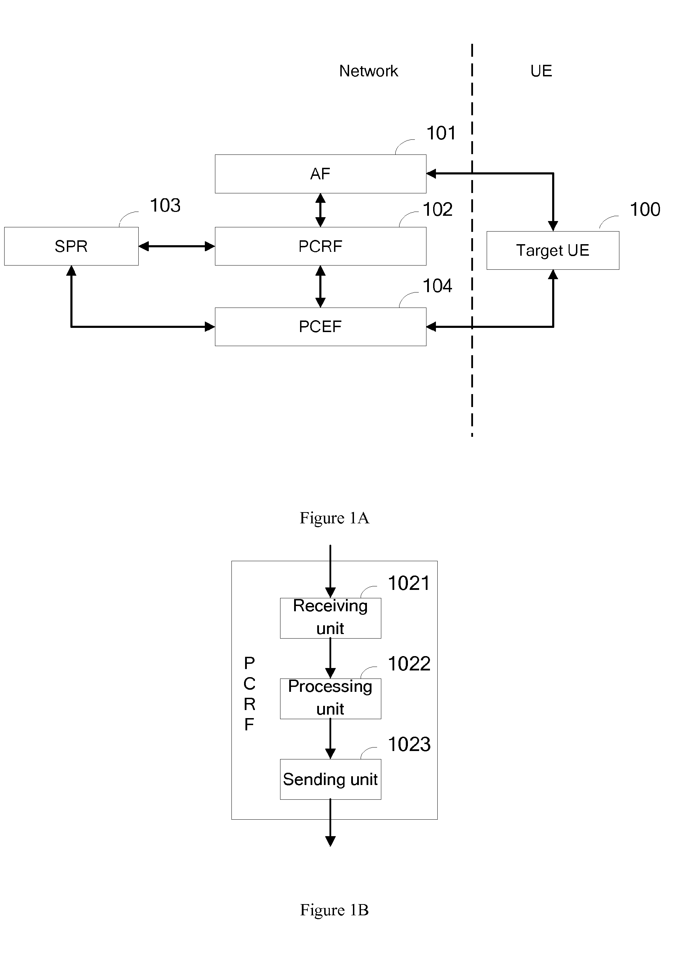

Figure 1A shows a structure of a multimedia communication system according to an embodiment of the present invention;

Figure 1B shows a structure of a PCRF entity according to an embodiment of the present invention;

Figure 1B shows a structure of a PCEF entity according to an embodiment of the present invention;

Figure 2 shows how a PCRF notifies the PCEF proactively to initiate update of the control policy according to an embodiment of the present invention; and

Figure 3 shows how a PCRF delivers a control policy to the PCEF proactively according to an embodiment of the present invention.

### DETAILED DESCRIPTION

In the forked call scenario of a multimedia communication system, matching session control is exercised on the corresponding target UE to enable the PCEF to obtain updated control policies in time. In this embodiment, the PCRF obtains or generates the corresponding control policy according to the policy request information, and delivers the control policy to the PCEF. The PCRF obtains or generates multiple control policies specific to multiple target UEs corresponding to the same public user identifier, and delivers the control policies. The policy request information includes authorized initialization request and authorized modification request. The PCRF delivers the control policy to the PCEF proactively after obtaining or generating the control policy according to the authorized modification request, or delivers a policy update notification to the PCEF, and delivers the control policy to the PCEF upon receiving the response (namely, policy update request) from the PCEF.

The invention is hereinafter described in detail with reference to preferred embodiments and accompanying drawings.

As shown in Figure 1A, in this embodiment, the multimedia communication system includes: a target UE 100, an AF 101, a PCRF 102, an SPR 103, and a PCEF 104.
aThe target UE 100, is adapted to send a response to the AF 101, and send replies to the PCEF 104 and AF 101 respectively;.
Tanhe AF 101, is adapted to send policy request information to the PCRF 102 after receiving the response, and notify the PCRF 102 after receiving the replyresponse;.
Tanhe SPR 103, is adapted to store a subscription profile of the target UE 100, where the subscription profile is adapted to generate the control policy specific to the target UE 100;.
Thea PCRF 102, is adapted to obtain or generate multiple control policies specific to multiple target UEs 100 corresponding to the same public user identifier, and deliver the control policies to the PCEF 104; and.
aThe PCEF 104, is adapted to select a proper control policy among the control policies delivered by the PCRF 102 according to the replyresponse sent by one of the multiple target UEs 100, and execute the control policy.

As shown in Figure 1B, the PCRF 102 includes:
a receiving unit 1021, adapted to receive policy request information;
a processing unit 1022, adapted to obtain or generate multiple control policies specific to multiple target UEs corresponding to the same public user identifier according to the policy request information; and
a sending unit 1023, adapted to deliver the control policies obtained or generated.

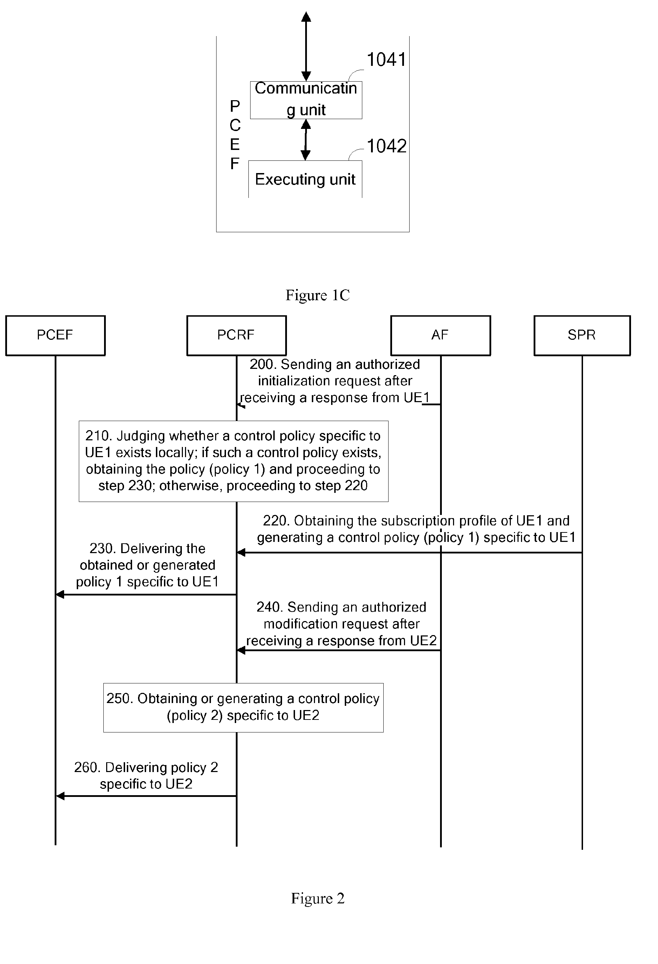

As shown in Figure 1C, the PCEF 104 includes:
a communicating unit 1041, adapted to receive the control policies delivered by the PCRF 102, and receive the replies sent by the target UE 100; and
an executing unit 1042, adapted to select a proper control policy among the received control policies according to the replies sent by the target UEs 100, and execute the control policy.

In this embodiment, the mobile number and the residential telephone number of the user are bound to the same public telephone number. When the public telephone number is dialed, the mobile phone (UE1) and the residential telephone (UE2) of the user send a response to the AF 101 consecutively. After receiving the response, the AF 101 sends the corresponding policy request information to the PCRF 102 consecutively. According to the policy request information, the PCRF 102 obtains or generates a control policy specific to UE1 and another control policy specific to UE2, and delivers the two control policies to the PCEF 104.

As shown in Figure 2, the process of for the PCRF 102 to notifying the PCEF 104 to initiate update of the control policy is detailed below.

Step 200: UE1 returns a response to the AF 101, and the AF 101 sends an authorized initialization request to the PCRF 102, where the authorized initialization request includes the user address of UE 1 and the application service requested by the UE1.

Step 210: The PCRF 102 judges whether a locally stored control policy, exists which matches the user address of UE1 and the application service requested by the user, exists; if such a control policy exists, the PCRF 102 obtains the control policy (policy 1) specific to UE1 locally and then proceeds to step 230; if no such control policy exists, the PCRF 102 proceeds to step 220.

Step 220: The PCRF 102 obtains the subscription profile of UE1 from the SPR 103 according to the user address of UE1 and the application service requested by UE1, generates the corresponding control policy (policy 1) according to the subscription profile, and then proceeds to step 230.

Step 230: The PCRF 102 delivers policy 1 which is obtained or generated specific to UE1 to PCEF 104, where policy 1 includes the subscription profile of UE1.

Step 240: Following UE1, UE2 returns a response to the AF 102, and the AF 101 sends an authorized modification request to the PCRF 102, where the authorized modification request includes the user address of UE2 and the application service requested by UE2.

Step 250: The PCRF 102 obtains the corresponding control policy locally according to the subscription profile of UE2 and the application service requested by UE2 in the authorized modification request; or, obtains the subscription profile of UE2 from the SPR 102 and then generates the corresponding control policy.

Step 260: The PCRF 102 delivers the control policy (policy 2) which is obtained or generated specific to UE2 to PCEF 104, where policy 2 includes the user address of UE2.

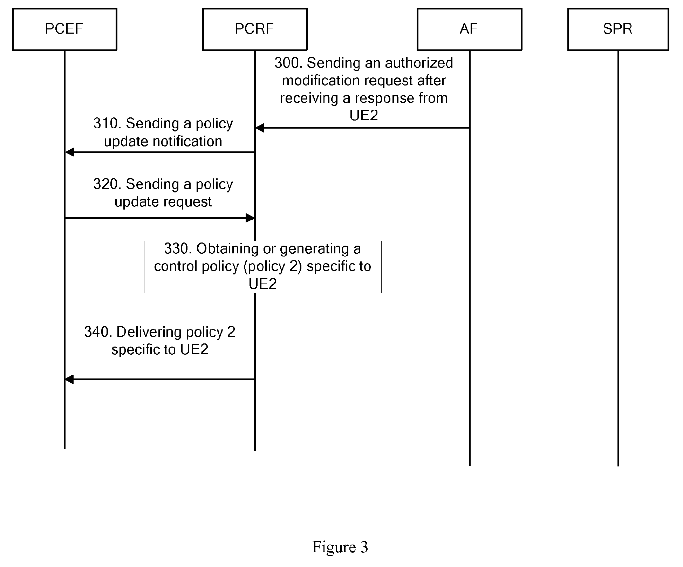

At the same time, after receiving the authorized modification request from the AF101, the PCRF 102 may send a policy update notification to the PCEF 104 first, and obtain or generate the corresponding control policy according to the authorized modification request after receiving the policy update request from the PCEF 104. As shown in Figure 3, the process of the second method for the PCRF 102 to update the control policy proactively in this embodiment is detailed below:

Step 300: Following UE1, UE2 returns a response to the AF 102, and the AF 101 sends an authorized modification request to the PCRF 102, where the authorized modification request includes the user address of UE2 and the application service requested by UE2.

Step 310: The PCRF 102 sends a policy update notification to the PCEF 104.

Step 320: The PCEF 104 sends a policy update request to the PCRF.

For example, the PCEF 104 finds that the resource transmission is restricted by a PCC rule, and this PCC rule needs to be obtained from the PCRF 102.

Step 330: The PCRF 102 obtains the corresponding control policy locally according to the user address of UE2 and the application service requested by UE2 in the authorized modification request; or, obtains the subscription profile of UE2 from the SPR 102 and then generates the corresponding control policy.

Step 340: The PCRF 102 delivers the control policy (policy 2) which is obtained or generated specific to UE2 to PCEF 104, where policy 2 includes the user address of UE2.

According to the foregoing embodiment, when the user performs a conversation through UE2, UE2 sends a response to the PCEF 104 and AF 102, where the response includes the user address of UE2. According to the user address of UE2, the PCEF 104 selects policy 2 as the ultimately executed control policy. At the same time, the AF 102 notifies the receiving state of the user to the PCRF 102, while the PCRF 102 deletes policy 1 buffered locally and notifies the PCEF 104 to delete the delivered policy 1.

In the conversation process of the user, if the application service used by the user changes (for example, the user wants to perform a video conversation while performing an audio conversation), the AF 101 sends an authorized modification request to the PCRF 102, and notifies the IP address of UE2 and the lately requested multimedia service content to the PCRF 102. While obtaining or generating the corresponding control policy again according to the authorized modification request, the PCRF 102 delivers the control policy to the PCEF 104 proactively; or, the PCRF 102 delivers a policy update notification to the PCEF 104, and delivers the control policy to the PCEF 104 upon receiving a policy update request from the PCEF 104. Therefore, no matter which level of QoS capability is owned by UE2, the PCEF 104 can obtain the latest control policy, and perform session control for UE2 according to the control policy.

It is apparent that those skilled in the art can make various modifications and variations to the present invention without departing from the spirit and scope of the present invention. The present invention is intended to cover those modifications and variations provided that they fall in the scope of protection defined by the following claims or their equivalents.

## Claims

1. A method for controlling policies, wherein, the method comprises:
obtaining or generating, by a Policy and Charging Rule Function (PCRF), a control policy corresponding to each target User Equipment (UE) according to policy request information of multiple target UEs, and delivering the control policies of multiple target UEs to a Policy and Charging Enforcement Function (PCEF), wherein the multiple target UEs correspond to a same public user identifier; and
selecting, by the PCEF, a proper control policy among the control policies of the multiple target UEs according to a reply sent by one of the multiple target UEs, and executing the control policy.

2. The method of claim 1, wherein:
the policy request information comprises an authorized modification request; and
the PCRF obtains or generates the proper control policy according to the authorized modification request, and delivers the control policy to the PCEF proactively; orises

3. The method of claim 1, wherein the obtaining or generating, by the PCRF, the control policy corresponding to each target UE according to the policy request information of the multiple target UEs comprises:
obtaining or generating, by the PCRF, the control policy corresponding to each target UE according to a user address and an application service requested by the target UE in the policy request information.

4. The method of claim 3, wherein:
the PCEF selects the control policy that matches the user address among the received control policies of the multiple target UEs according to user address information, and exercises control on the corresponding target UE according to the selected control policy; or
the PCEF obtains a subscription profile from a Subscription Profile Repository (SPR) according to the subscription profile in the policy request information or according to the user address; generates the corresponding control policy according to the obtained subscription profile; and controls the corresponding target UE according to the generated control policy.

5. The method of claim 4,:
deleting, by the PCRF, upon receiving a response sent by one of the target UEs, the control policies corresponding to the remaining target UEs; and
notifying, by the PCRF, the PCEF to delete control policies corresponding to the remaining target UEs.

6. The method according to any one of claims 1-5, wherein the control policies comprise charging policies and/or Quality of Service (QoS) policies.

7. The method of claim 6, wherein:
if the application service requested by the target UE which sends the reply changes in the process of executing the control policy, the PCRF obtains or generates the corresponding control policy again according to the received policy request information, and delivers the control policy to the PCEF again, and the PCEF controls the corresponding target UE according to the control policy delivered again.

8. A method for updating a control policy, comprising:
obtaining or generating, by a Policy and Charging Rule Function (PCRF), the corresponding control policy according to a received authorized modification request, and delivering the control policy to a Policy and Charging Enforcement Function (PCEF) proactively; or
delivering a policy update notification to the PCEF, and delivering the control policy to the PCEF after receiving a policy update request from the PCEF.

9. A communication apparatus, comprising:
a receiving unit, adapted to receive policy request information;
a processing unit, adapted to obtain or generate a control policy corresponding to each target User Equipment (UE) according to the policy request information of multiple target UEs corresponding to a same public user identifier; and
a sending unit, adapted to deliver the control policies obtained or generated.

10. A communication apparatus, comprising:
a communicating unit, adapted to receive control policies of multiple target User Equipments (UEs) and replies sent by the target UEs; and
an executing unit, adapted to select a proper control policy among the received control policies of the multiple target UEs according to the replies sent by the target UEs, and execute the control policy.

11. The communication apparatus of claim 10, wherein:
the executing unit selects the matching control policy from the received control policies according to a user address carried in the reply and the user address carried in the control policies.

12. A multimedia communication system, comprising:
an Application Function (AF), is adapted to send the policy request information to the PCRF upon receiving a response from a target User Equipment (UE); and
the PCRF, adapted to obtain or generate control policies corresponding to each target UE according to the policy request information of multiple target UEs corresponding to a same public user identifier, and deliver the control policies of the multiple target UEs to a Policy and Charging Enforcement Function (PCEF); and
the PCEF is adapted to select a proper control policy among the control policies of the multiple target UEs delivered by the PCRF according to a response sent by one of the target UEs, and execute the control policy.

13. The multimedia communication system of claim 12, further comprising:
a Subscription Profile Repository (SPR), adapted to store subscription profiles of the target UEs, wherein, correspondingly, the control policy generated by the PCRF is based on the subscription profiles.

14. The multimedia communication system of claim 12, wherein the PCRF comprises:
a receiving unit, adapted to receive the policy request information which comprises an authorized initialization request and/or an authorized modification request;
a processing unit, adapted to obtain or generate the control policies corresponding to each target UE according to the policy request information of the multiple target UEs corresponding to the same public user identifier; and
a sending unit, adapted to deliver the obtained or generated control policies of the multiple target UEs.

15. The multimedia communication system of claim 12, wherein the PCEF comprises:
a communicating unit, adapted to receive the control policies, and receive the replies sent by the target UE; and
an executing unit, adapted to select the proper control policy among the received control policies of the multiple target UEs according to the replies sent by the target UEs, and execute the control policy.

16. The multimedia communication system of claim 12, claim 13, or claim 14, wherein:
the PCRF obtains or generates the control policies of the multiple target UEs according to the authorized modification request if the policy request information is the authorized modification request, and delivers the control policies to the PCEF proactively; or
the PCEF delivers a policy update notification to the PCEF, and delivers the control policy to the PCEF after receiving a policy update request from the PCEF.

17. The multimedia communication system of claim 15, wherein:, notify the PCRF to delete the control polices corresponding to the remaining target UEs after receiving a reply sent by one of the target UEs, and the PCRF notifies the PCEF to delete the corresponding control policy.
